# EUROPÄISCHE PATENTSCHRIFT

(11) **EP 1 117 718 B1**
(45) Veröffentlichungstag und Bekanntmachung des Hinweises auf die Patenterteilung: **01.10.2003**
(21) Anmeldenummer: 99938305.2
(22) Anmeldetag: 21.07.1999
(51) Int. Cl.: C08G 18/62, C08G 18/34, C08G 18/70, C08G 18/08, C08K 5/09, C08J 9/00

(54) **VERFAHREN ZUR HERSTELLUNG VON GESCHÄUMTEN POLYISOCYANAT-POLYADDITIONSPRODUKTEN ODER POLYURETHANELASTOMEREN UNTER VERWENDUNG VON MISCHUNGEN ENTHALTEND ISOCYANATE SOWIE ORGANISCHE UND/ODER ANORGANISCHE SÄUREANHYDRIDE**
PROCESS FOR THE PREPARATION OF FOAMED POLYISOCYANATE-POLYADDITION PRODUCTS OR POLYURETHANE ELASTOMERS USING MIXTURES CONTAINING ISOCYANATES AS WELL AS ORGANIC AND/OR INORGANIC ACID ANHYDRIDES
PROCEDE DE FABRICATION DE PRODUITS CELLULAIRES DE POLYADDITION DE POLYISOCYANATES OU D'ELASTOMERES POLYURETHANES EN UTILISANT UNE MELANGE CONTENANT DES ISOCYANATES ET DES ANHYDRIDES D'ACIDES ORGANIQUES ET/OU INORGANIQUES

(30) Priorität: 21.08.1998 DE 19838167
(43) Veröffentlichungstag der Anmeldung: 25.07.2001
(73) Patentinhaber: BASF AKTIENGESELLSCHAFT, 67056 Ludwigshafen (DE)
(72) Erfinder: KREYENSCHMIDT, Martin, D-67551 Worms (DE); ARLT, Andreas, D-72474 Winterlingen (DE); LORENZ, Reinhard, D-67117 Limburgerhof (DE); TREULING, Ulrich, D-64625 Bensheim (DE)
(86) Internationale Anmeldenummer: EP9905183
(87) Internationale Veröffentlichungsnummer: WO00011059

(56) Entgegenhaltungen:
- GB-A- 1 095 922
- GB-A- 2 196 974
- US-A- 4 980 387
- US-A- 5 216 039
- PATENT ABSTRACTS OF JAPAN vol. 004, no. 166 (C-031), 18. November 1980 (1980-11-18) & JP 55 106258 A (ASAHI CHEM IND CO LTD), 14. August 1980 (1980-08-14)

## Beschreibung

Die Erfindung bezieht sich auf Verfahren zur Herstellung von Polyisocyanat-Polyadditionsprodukten durch Umsetzung von Isocyanaten mit gegenüber Isocyanaten reaktiven Verbindungen mit einem Molekulargewicht von 60 bis 10000g/mol in Gegenwart von gegebenenfalls Katalysatoren, Treibmitteln, Zusatzstoffen und/oder Hilfsmitteln, wobei die Umsetzung in gegewart mindestens eines organischen oder anorganischen Säureanhydrids (ii) durch geführt wird, derart herstellbare Polyisocyanat-Polyadditionsprodukte und die Verwendung von den erfindungsgemäßen Säureanhydriden in Polyisocyanat-Polyadditionsprodukten.

Die Herstellung von Polyisocyanat-Polyadditionsprodukten durch Umsetzung von Polyisocyanaten mit gegenüber Isocyanaten reaktiven Verbindungen, Katalysatoren, die die Reaktion der gegenüber Isocyanaten reaktiven Stoffe mit Isocyanaten beschleunigen und gegebenenfalls Treibmittel, Zusatzstoffe, und/oder Hilfsmittel ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, hat speziell die Einwirkung von Feuchtigkeit und noch verstärkt die Kombination von Feuchtigkeit und Temperatur eine hydrolytische Spaltung der Urethan- und Harnstoffbindungen zur Folge.

Diese Spaltung äußert sich nicht nur in einer signifikanten Verschlechterung der Gebrauchseigenschaften, sondern führt auch zur Bildung von primären aromatischen Aminen wie z.B. Toluylendiamin (TDA) und Diaminodiphenylmethan (MDA) oder primären aliphatischen Aminen wie beispielsweise Hexamethylendiamin oder Isophorondiamin.

Wie in Versuchen festgestellt wurde, wird die Aminbildung von einer Reihe von Parametern beeinflußt. Insbesondere hohe Temperaturen ab 80°C in Kombination mit hoher Luftfeuchtigkeit führen zur hydrolytischen Spaltung der Urethan- und Hamstoffbindungen. Derartige Bedingungen sind für einige spezielle Anwendungsgebiete von PUR-Weichschaumstoffen von Bedeutung.

DE-A 42 32 420 offenbart die Verwendung von α, β-ungesättigten Estercarboxylaten, die als Katalysatoren zusätzlich zu Aminen eingesetzt wurden, zur Herstellung von Polyurethanschaumstoffen, die eine verbesserte Stauchhärte und Reißdehnung aufweisen. Die olefinischen Doppelbindungen der Estercarboxylate sollen Amine durch eine Addition an die Doppelbindung abfangen. US 4 255 526 beschreibt den Einsatz von Aminosäuren bei der Herstellung von Polyurethanschaumstoffen zur Erhöhung der Stabilität hinsichtlich Feuchtigkeit und Hitze.

Nachteilig an diesen bekannten Lehren ist, daß die eingesetzten Stoffe relativ teuer sind und zudem nach dem Stand der Technik erst bei der Herstellung der Polyisocyanat-Polyadditionsprodukte zugegeben werden. Bislang ist es nicht gelungen, Hydrolysestabilisatoren zu entwickeln, die erst nach dem Verarbeitungsprozeß ihre Aktivität entwickeln. In den überwiegenden Fällen greifen die bisher verwendeten Materialien direkt in den Reaktionsverlauf bei der Verarbeitung von Isocyanaten und gegenüber Isocyanaten reaktiven Verbindungen ein, verändern die Reaktivität dieser Komponenten zueinander und machen eine weitere Systemanpassung unumgänglich. Auch die in DE-A 23 50 684 beschriebenen Katalysator-Säure-Komplexe werden bei der Herstellung der Polyurethane zu den Ausgangskomponenten zugegeben. Eine Zugabe eines Hydrolysestabilisators, der die Reaktivität des Systems während des Verarbeitungsprozesses nicht beeinflußt und über die Isocyanatkomponente zugegeben wird ist nicht bekannt.

EP-A 711 799 beschreibt die Herstellung von Polyurethanformkörpern mit einem zelligen Kern und einer verdichteten Randzone, die in Gegenwart von polymeren Carbonsäuren oder deren Derivaten hergestellt werden, wobei die Polymere der gegenüber Isocyanaten reaktiven Komponente zugegeben werden. Die Aufgabe, die dieser Schrift zugrunde lag, war der Ersatz von Fluorchlorkohlenwasserstoffen als Treibmitteln und die Herstellung von Formkörpern mit einer verbesserten Haut. Das Problem der Alterungsprozesse bei Polyurethanen wird in dieser Schrift nicht angesprochen.

Häufig werden zur Herstellung von Polyurethansystemen Katalysatoren, beispielsweise organische Amine, eingesetzt, die bei einer Herstellung von Polyurethanschäumen bevorzugt sowohl die Treibreaktion, d.h. die Umsetzung der Isocyanatgruppen mit beispielsweise Wasser zur Bildung von Kohlendioxid, als auch die Vernetzungsreaktion zwischen alkoholischen Hydroxylgruppen und Isocyanaten zur Urethangruppe beschleunigen. Um das Fließvermögen und die Durchhärcung der Reaktionsmischungen zu verbessern, kann es insbesondere bei der Herstellung von geschäumten Polyurethanen vorteilhaft sein, die Amine blockiert durch Salzbildung mit einer organischen Säure, üblicherweise Ameisen-, Essig- oder Ethylhexansäure, einzusetzen. Während der Polyisocyanat-Polyadditionsreaktion unter Einwirkung der Reaktionswärme zerfallen die thermisch reversibel blockierten Katalysatoren, das katalytisch aktive Amin wird freigesetzt und die Vernetzungs- oder Schäumreaktion setzt erst nach ausreichender Start- und Steigzeit des Reaktionsgemisches verstärkt ein. Katalysatoren dieser Art werden in DE-A 28 12 256 beschrieben.

Nachteilig an diesem Einsatz von verzögert wirkenden Katalysatoren ist die Tatsache, daß diese Katalysatoren in einem äquimolaren Verhältnis von basischem Katalysator zu blockierender Säure eingesetzt werden und nach erfolgter Katalyse der Katalysator unblockiert in dem Polyisocyanat-Polyadditionsprodukt vorliegt. Auch ist anzumerken, daß die Katalysatoren meistens mit leichtflüchtigen Säuren blockiert werden und diese während der hohen Temperaturen des Verarbeitungsprozesses aus dem System verdampfen und für eine Blockierung des Katalysators nicht mehr vorliegen. Darüber hinaus können in den überwiegenden Fällen nicht ausschließlich blockierte Katalysatoren eingesetzt werden, weil ansonsten die Reaktion zu langsam wird, so daß niemals die gesamte Menge des im System verbleibenden Katalysators blockiert wird und sehr große Anteile freien Katalysators die Urethanspaltung katalysieren können.

Aufgabe der vorliegenden Erfindung war es somit, ein Verfahren zu entwickeln, das bei der Polyisocyanat-Polyadditionsreaktion zu Produkten mit einer verbesserten Stabilität gegen Alterungsprozesse, insbesondere gegen Hydrolyse, führt. Des weiteren sollte ein Stabilisator entwickelt werden, der es ermöglicht, die Hydrolyse bei Polyetherurethanen zurückzudrängen und damit auch zu verhindern, daß aromatische Amine freigesetzt werden.

Diese Aufgabe konnte durch die eingangs beschriebenen Mischungen gelöst werden, die als Komponenten bei der Herstellung von Polyisocyanat-Polyadditionsprodukten eingesetzt werden können.

Es konnte überraschend festgestellt werden, daß ein bei einer Herstellung von Polyisocyanat-Polyadditionsprodukten anwesender aminischer Katalysator nicht nur die Polyadditionsreaktion, d.h. die Bildung von Urethangruppen beschleunigt, sondern nach erfolgter Polyadditionsreaktion auch und verstärkt die Spaltung der Urethanbindungen katalysiert. Dies gilt insbesondere bei einer Lagerung der Polyisocyanat-Produkten unter feuchten und warmen Bedingungen und wird durch die Tatsache verstärkt, daß der Katalysator nach der Herstellung der Polyisocyanat-Polyadditionsprodukte nicht blockiert und damit aktiv vorliegt und die Rückspaltung katalysiert. Die Spaltung der Urethanbindung führt nicht nur zu einer Verschlechterung der Eigenschaften der Polyisocyanat-Polyadditionsprodukte, sondern kann auch zur Bildung von Aminen führen, die unerwünscht sind.

Aufgrund des erfindungsgemäßen Einsatzes von (ii) mindestens einem Säureanhydrid erreicht man, daß die Anhydride in den Polyisocyanat-Polyadditionsprodukten insbesondere unter feuchten und warmen Bedingungen zu den Säuren hydrolysiert werden. Diese nach der Hydrolyse entstandenen Säuren blockieren die gegebenenfalls in den Produkten enthaltenen aminischen Katalysatoren beispielsweise durch Protonierung oder Reaktion und verhindern somit unter den genannten Bedingungen eine effektive Rückspaltung der Urethan- und/oder Harnstoffbindungen. Zudem werden durch eine unerwünschte Spaltung von Urethan- und/oder Harnstoffbindungen gegebenenfalls entstandene freie Aminogruppen durch Reaktion mit den erfindungsgemäßen Säureanhydriden gebunden.

Die Säureanhydride werden somit in Polyisocyanat-Polyadditionsprodukten zur Stabilisierung der Polyisocyanat-Polyadditionsprodukte, beispielsweise von Urethan- und/oder Harnstoffbindungen, insbesondere Polyurethane, gegen eine Spaltung der. Urethan- und Harnstoffbindungen verwendet, beispielsweise durch Blockierung von aminischen Katalysatoren durch Protonierung der Katalysatoren oder durch Reaktion mit den Katalysatoren. Zudem können die Säureanhydride in polyisocyanat-Polyadditionsprodukten zur Reaktion mit Aminogruppen, beispielsweise zu Amiden, in den Polyisocyanat-Polyadditionsprodukten Verwendung finden.

Die Diffusion von Aminen aus den Polyisocyanat-Polyadditionsprodukten und die Rückspaltung der Urethanbindung beispielsweise durch in den Polyisocyanat-Polyadditionsprodukten vorhandene aminische Katalysatoren kann damit erfindungsgemäß vermindert kann.

Es wurde überraschenderweise gerunden, daß Säureanhydride, die bei der Herstellung von Polyisocyanat-Polyadditionsprodukten eingesetzt werden, den Herstellprozeß nahezu unbeschadet überstehen und nicht wesentlich in die Reaktion eingreifen. Erfindungsgemäß werden die Säureanhydride in Mischung mit Isocyanaten einsetzt, da diese Komponente üblicherweise frei von Wasser ist und somit eine Hydrolyse der Anhydride vermieden werden kann.

Überraschend konnte festgestellt werden, daß die Säureanhydride in Mischung mit Isocyanaten bei Raumtemperatur, d.h. 25°C stabil sind und die Isocyanatgruppen nicht oder nicht wesentlich mit den Anhydridgruppen reagieren.

Die Säureanhydride bzw. Mischungen, kann man zur Herstellung von Polyisocyanac-Polyadditionsprodukten nach allgemein bekannten Verfahren durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln einsetzen. Als Polyisocyanat-Polyadditionsprodukte können beispielsweise kompakte oder zellige, beispielsweise mikrozellige, weiche, halbharte oder harte Polyurethanschäume, thermoplastische Polyurethane, oder Polyurethanelastomere nach üblichen Verfahren unter Verwendung der erfindungsgemäßen Mischungen hergestellt werden. Bevorzugt setzt man die Mischungen in Verfahren zur Herstellung von Polyurethanelastomeren oder geschäumten Polyisocyanat-Polyadditionsprodukten, insbesondere Polyurethanweichschaumstoffen, durch Umsetzung von Isocyanaten mit gegenüber Isocyanaten reaktiven Verbindungen in Gegenwart von Katalysatoren, Treibmitteln, Zusatzstoffen und/oder Hilfsmitteln ein.

Die vorliegende technische Lehre ist speziell für Schaumstoffe, die feucht-warmen Bedingungen (Heißdampfdesinfektion, bzw. zukünftig -sterilisierung von Krankenhausmatratzen, Heißdampfreinigung von Polstermöbeln und Teppichen) von außerordentlichem Vorteil.

Die mit einer Spaltreaktion des Polyurethans verbundene Bildung von primären aromatischen Aminen wie Toluylendiamin oder Diaminodiphenylmethan wird dadurch ebenfalls deutlich vermindert. Die stabilisierende Wirkung beruht vorteilhaft auf einer Verhinderung der Bildung primärer Amine. Durch die erfindungsgemäßen Säureanhydride wird sowohl einer Verschlechterung der mechanischen Eigenschaften insbesondere unter feucht-warmer Belastung als auch der Bildung von primären Aminen, insbesondere primären aromatischen Aminen, beispielsweise 2,2'-, 2,4'-, und/oder 4,4'-MDA und/oder 2,4- und/oder 2,6-TDA entgegengewirkt.

Besonders bevorzugt setzt man die erfindungsgemäßen Säureanhydride in Verfahren zur Herstellung von Polyurethanweichschaumstoffen mit einer Dichte von 15 bis 300 kg/m3, bevorzugt 20 bis 70 kg/m³, insbesondere Matratzen und/oder Polsterungen für Möbel und/oder Teppiche, insbesondere Krankenhausmatratzen, durch Umsetzung von Isocyanaten mit gegenüber Isocyanaten reaktiven Verbindungen in Gegenwart von Katalysatoren, Treibmitteln und gegebenenfalls Zusatzstoffen und/oder Hilfsmitteln ein. Diese Produkten, d.h. insbesondere die Polsterungen für Möbel und/oder Teppiche und/oder die Matratzen werden zunehmend zur Reinigung bzw. Desinfektion mit heißem Dampf behandelt, womit gerade bei diesen Produkten, die erfindungsgemäß besonders bevorzugt sind, die erfindungsgemäßen Vorteile besonders ausgeprägt sind. In den erfindungsgemäßen Verfahren wird (ii) bevorzugt in einer Menge von 0,01 bis 20 Gew.-%, besonders bevorzugt 0,1 bis 6 Gew.-%, jeweils bezogen auf das Gesamtgewicht von (i) und (ii), eingesetzt.

Als Isocyanate kommen in den erfindungsgemäßen Mischungen beispielsweise nachfolgend beschriebene Verbindungen in Frage:

Als Isocyanate können die an sich bekannten aliphatischen, cycloaliphatischen, araliphatischen und vorzugsweise aromatischen organischen Isocyanate, bevorzugt mehrfunktionellen, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylen-diisocyanat-1,4, 2-Methylpentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Diund Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3-Dimethyl-4,4'-diisocyanatodiphenyl (TODI) , Mischungen aus TODI und 4,4'- und/oder 2,4'-Diphenylmethan-diisocyanaten, Polyphenyl-polymethylen-polyisocyanate, Mischungen aus 4,4'-, 2,4'und 2,2'-Diphenylmethan-diisocyanaten und Polyphenylpolymethylenpolyisocyanaten (Poh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4, 4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'und/oder 2,2'-Diphenylmethan-diisocyanat, NDI, TODI und/oder 2,4-und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4-und/oder 2,6-Toluylen-diisocyanat gegebenenfalls gemischt werden.

Bevorzugt werden als Isocyanate in den erfindungsgemäßen Verfahren 4,4'-, 2,4'- und/oder 2,2'-Diphenylmethandiisocyanat, 2,4- und/oder 2,6-Toluylendiisocyanat, NDI, Hexamethylendiisocyanat und/oder Isophorondiisocyanat Einsatz, wobei diese Isocyanate sowohl in beliebigen Mischungen als auch wie bereits beschrieben modifiziert eingesetzt werden können. Prinzipiell ist jedoch die Wirksamkeit dieser Anhydride unabhängig vom eingesetzten Isocyanat.

Als gegenüber Isocyanaten reaktive Verbindungen mit üblicherweise mindestens zwei reaktiven Wasserstoffatomen, üblicherweise Hydroxyl- und/oder Aminogruppen, werden zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyetherpolyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyesterpolyolen sowie hydroxylgruppenhaltigen Polyesteramiden, Polyacetalen, Polycarbonaten und/oder Polyether-polyaminen gemischt werden.

Als Polyolkomponenten werden dabei für Polyurethanhartschaumstoffe, die gegebenenfalls Isocyanuratstrukturen aufweisen können, hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten 5 Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Zur Herstellung von thermoplastischen Polyurethanen verwendet man bevorzugt Polyole mit einer Funktionalität von 2 bis 2,2 und keine Vernetzungsmittel.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Diole und/oder Triole mit Molekulargewichten von 60 bis <500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt ohne Vernetzungsmittel hergestellt werden.

Als (ii) können organische oder anorganische Säureanhydride, beispielsweise auch Polyanhydride, eingesetzt werden, bevorzugt Carbonsäureanhydride, beispielsweise Anhydride aliphatischer, cycloaliphatischer, araliphatischer und/oder aromatischer Carbon-5 säuren mit üblicherweise 1 bis 10, bevorzugt 1 bis 2, Carboxylgruppen, wobei auch gemischte Anhydride hergestellt auf der Basis von mindestens zwei verschiedenen Carbonsäuren eingesetzt werden können. Als Anhydride können auch Polyanhydride eingesetzt werden, die durch Di- und/oder Polycarbonsäuren erhältlich sind bzw. Copolymere aus Anhydriden und unterschiedlichsten Alkenen. Bevorzugt sind die Carboxylgruppen der Verbindungen weitgehend, besonders bevorzugt vollständig in die entsprechenden Anhydride überführt. Die Verbindungen (ii) weisen üblicherweise ein Molekulargewicht von 60 bis 1000000 auf. Beispielhaft seien genannt: Essigsäureanhydrid, Propionsäureanhydrid, Buttersäureanhydrid, Pentansäureanhydrid, Hexansäureanhydrid, Heptansäureanhydrid, Oktansäureanhydrid, Dimethylolpropionsäureanhydrid, Adipinsäureanhydrid, Fumarsäureanhydrid, Mesaconsäureanhydrid, Methylenmalonsäurenahydrid, Trimellithsäureanhydrid, 4,4'-Ethylenglykolbis-anhydrotrimellithat, 4,4'-(2-Acetyl-1,3-glycerin)bis-anhydrotrimellithat, Decandionsäureanhydrid, Dodecandionsäureanhydrid, Azelainsäureanhydrid, Pimelinsäureanhydrid, Brassylsäureanhydrid, Citraconsäureanhydrid, Itaconsäureanhydrid, Naphthalin-1, 8-dicarbonsäureanhydrid, Naphthalin-1,2-dicarbonsäureanhydrid, Chlorendicsäureanhydrid, 1,2,3,6-Tetrahydrophthalsäureanhydrid, Mellophansäureanhydrid, Benzol-1,2,3,4-tetracarbonsäureanhydrid, Benzol-1,2,3-tricarbonsäureanhydrid, Benzoesäureanhydrid, Diphenyl-3,3'-4,4'-tetracarbonsäureanhydrid, Diphenyl-2,2'-3,3'tetracarbonsäureanhydrid, Naphthalin-2,3,6,7-tetracarbonsäureanhydrid, Naphthalin-1,2,4, 5-tetracarbonsäureanhydrid, Naphthalin-1,4,5,8-tetracarbonsäureanhydrid, Decahydronaphthalin-1,4,5, 8-tetracarbonsäureanhydrid, 4,8-Dimethyl-1,2,3,5,6,7-hexahydronaphthalin-1,2,5,6-tetracarbonsäureanhydrid, 2,6-Dichloronaphthalin-1,4,5,8-tetracarbonsäureanhydrid, 2,7-Dichloronaphthalin-1,4,5,8-tetracarbonsäureanhydrid, 2,3,6,7-Tetrachloronaphthalin-1, 4,5, 8-tetracarbonsäureanhydrid, Phenanthren-1,3,9,10-tetracarbonsäureanhydrid, Perylen-3,4,9,10-Tetracarbonsäureanhydrid, Bis(2,3-dicarboxyphenyl)methananhydrid, Bis(3, 4-dicarboxyphenyl)methananhydrid, 1,1-Bis(2,3-dicarboxyphenyl)ethananhydrid, 1,1-Bis (3, 4-dicarboxyphenyl) ethananhydrid, 2,2-Bis(2,3-dicarboxyphenyl)propananhydrid, 2,2-Bis(3,4-dicarboxyphenyl) propananhydrid, Bis (3,4-dicarboxyphenyl) sulfonanhydrid, Bis(3,4-dicarboxyphenyl)etheranhydrid, Ethylentetracarbonsäureanhydrid, Butan-1,2,3,4-tetracarbonsäureanhydrid, Cyclopentan-1,2,3,4-tetracarbonsäureanhydrid, Pyrrolidin-2,3,4,5-tetracarbonsäureanhydrid, Pyrazin-2,3,5,6-tetracarbonsäureanhydrid, Mellithsäureanhydrid, Thiophen-2,3,4,5-tetracarbonsäureanhydrid, Benzophenon-3,3',4,4'-tetracarbonsäureanhydrid, Maleinsäureanhydrid, Glutarsäureanhydrid, Pyromellitsäureanhydrid, Phthalsäureanhydrid, Isophthalsäure- und/oder Terephthalsäureanhydrid, Benzoesäureanhydrid, Phenylessigsäureanhydrid, Cyclohexylalkansäureanhydride, Malonsäureanhydrid, Bernsteinsäureanhydrid, Poly-maleinsäureanhydrid, Anhydride auf der Basis von Addukten der Maleinsäure mit Styrol, Dodecenylbernsteinsäureanhydrid, Anhydride aus Maleinsäure und beliebigen Alkylenen, wie n-Octylen-Bernsteinsäureanhydrid, n-Dodicylenbernsteinsäureanhydrid und/oder Copolymere aus Anhydriden und beliebigen weiteren Comonomeren, wie Isobuten und Maleinsäureanhydrid, Poly-(ethylen-co-acrylsäurebutylester comaleinsäuredianhydrid) und/oder Poly-(styrol-co-maleinsäureanhydrid), wobei die entsprechenden Di- oder Polysäuren teilweise oder bevorzugt vollständig als Anhydride vorliegen. Die entsprechenden Anhydride können bei den Di- oder Polysäuren, soweit dies sterisch möglich ist, sowohl inter- als auch intramolekular ausgebildet sein.

Als Comonomere, die mit den ungesättigten Carbonsäuren bzw. Carbonsäureanhydriden copolymerisierbar sind, können beispielsweise des weiteren Verwendung finden:

Olefine wie z.B. Ethylen, Propylen, n-Butylen, Isobutylen, n-Octylen, n-Dodicylen und Diisobuten, Vinylalkylether, wie z.B. Vinylmethyl-, Vinylethyl-, Vinylpropyl-, Vinylisopropyl-, Vinylbutyi-, Vinylisobutyl- und Vinyl-tert.-butylether, Vinylaromaten, wie z.B. Styrol und α-Methylstyrol, Furan und 2-Methylfuran, Diketen, Acryl- und Methacrylsäurederivate, beispielsweise (Meth)acrylamid, (Meth)acrylnitril, Alkyl(meth)acrylate, wie z.B. Methyl(meth)acrylat, Ethyl(mech)acrylat, Propyl(meth)-acrylat, Butyl(meth)acrylat, Isobutyl(meth)acrylat und Tert.butyl(meth)acrylat, Hydroxyalkyl(meth)acrylate, wie z.B. Hydroxyethyl(meth)acrylat, Hydroxypropyl(meth)acrylat, Hydroxybutyl-(meth)acrylat und Hydroxyisobutyl(meth)acrylat, Vinylcarbonsäureester, wie z.B. Vinylformiat, Vinylacetat, Vinylbutyrat und Vinylpivalat und andere vinylgruppenhaltige Monomere wie z.B. N-Vinylpyrrolidon, N-Vinylcaprolactam, N-Vinylformamid, N-Vinylacetamid, N-Vinylmethylacetamid und N-Vinylimidazol.

Bevorzugt werden als (ii) Anhydride auf der Basis folgender Verbindungen eingesetzt: Pyromellitsäure, Citraconsäure, Itaconsäure, Phthal-, Isophthal- und/oder Terephthalsäure, Benzoesäure, Phenylessigsäure, Cyclohexylalkansäure, Malonsäure, Addukten der Maleinsäure mit Styrol und/oder der Maleinsäure und Alkylenen, beispielsweise den bereits beschriebenen Comonomeren, Bernsteinsäure, Maleinsäure, Polymaleinsäure, Glutarsäure und/oder Copolymeren von den genannten ungesättigten Säuren mit Comonomeren, die mit diesen Säuren copolymerisierbar sind.

Besonders bevorzugt sind im allgemeinen solche Anhydride, die sich gut in (i) lösen.

Die erfindungsgemäßen Mischungen enthalten (ii) bevorzugt in einer Menge von 0,01 bis 20 Gew.-%, besonders bevorzugt 0,1 bis 6 Gew.-%, jeweils bezogen auf das Gewicht der Mischung.

Zusätzlich zu (i) und (ii) können die Mischungen Treibmittel, Zusatzstoffe, Hilfsmittel und/oder Katalysatoren, beispielsweise solche, die die Reaktion der gegenüber Isocyanaten reaktiven Stoffe mit Isocyanaten, beispielsweise die Treib- und/oder Vernetzungsreaktion, beschleunigen, enthalten.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Als Katalysatoren kommen allgemein übliche Verbindungen in Betracht, beispielsweise organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, M-Cyclohexylmorpholin, 2-Dimechylamino-ethoxy-ethanol, Dimethylethanolamin, Tetramethylhexamethylendiamin, Dimethylamino-N-methyl-ethanolamin, N-Methylimidazol, N-Formyl-N,N'-dimethylbuzylendiamin, N-Dimethylaminoethylmorpholin, 3,3'-Bis-dimethylamino-di-npropylamin und/oder 2,2'-Dipiparazin-diisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen in den Mischungen enthalten sein, besonders bevorzugt Triethylendiamin.

Die erfindungsgemäßen Mischungen werden bevorzugt zur Herstellung der Polyisocyanat-Polyadditionsprodukte, beispielsweise kompakten oder zelligen, beispielsweise mikrozelligen, thermoplastischen oder vernetzten, harten, halbharten oder weichen, elastischen oder unelastischen Polyurethanen eingesetzt.

Die Ausgangsstoffe für die Herstellung der Polyisocyanat-Polyadditionsprodukte sind beispielhaft bereits beschrieben worden. Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,9 bis 3 : 1 und insbesondere 0,95 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen.

Bevorzugt werden mit den erfindungsgemäßen Mischungen geschäumte Polyisocyanat-Polyadditionsprodukte, beispielsweise geschäumte Polyurethane- und/oder Polyisocyanurate hergestellt.

Als vorteilhaft hat es sich erwiesen, die Polyisocyanat-Polyadditionsprodukte nach dem Zweikomponentenverfahren herzustellen und die gegenüber Isocyanaten reaktiven Verbindungen und gegebenenfalls die Katalysatoren, Treibmittel und/oder Hilfs- und/oder Zusatzstoffe in der A-Komponence zu vereinigen und als B-Komponente die Isocyanate und Katalysatoren und/oder Treibmittel einzusetzen. Die Säureanhydride werden erfindungsgemäß der B-Komponente zugegeben. In der A-Komponente kann das Anhydrid nur mit einer begrenzten Lebensdauer eingebracht werden, ohne die Systemparameter zu verändern, da die in dieser Komponente vorliegenden aminischen Katalysatoren und das Wasser zu einer Hydrolyse des Anhydrids beitragen und damit die Aktivität der Katalysatoren bereits in den nicht verarbeiteten Systemen herabsetzen.
In dem erfindungsgemäßen Verfahren zur Herstellung der Polyisocyanat-Polyadditionsprodukte setzt man die Säureanhydride (ii) bevorzugt in einer Menge von 0,1 bis 20 Gew.-%, besonders bevorzugt 0,1 bis 6 Gew.-%, bezogen auf das Gewicht der Summe der Säureanhydride und der eingesetzten Isocyanate, ein.

Die Erfindung soll anhand der folgenden Beispiele dargestellt werden.

Polyurethanweichschaumstoffe wurden mit der folgenden Rezeptur hergestellt, wobei in den einzelnen Beispielen die in der Tabelle 1 angegebenen Zusätze an Säureanhydriden der Isocyanatkomponente (B-Komponente) vor dem Vermischen mit der Polykomponente (A-Komponente) zugesetzt wurden. Zum Vergleich wurden Schaumstoffe ohne Zugabe von Säureanhydriden hergestellt.

### A-Komponente

| | |
|---|---|
| 97 Gew.-Teile | eines Polyetherpolyalkohols mit einer Hydroxylzahl von 28 mg KOH/g, einer mittleren Funktionalität von 2,3 hergestellt mit einem Ethylenoxid zu Propylenoxid-Verhältnis von 14 : 86, |
| 3 Gew.-Teile | eines Polyetherpolyalkohols mit einer Hydroxylzahl von 42 mg KOH/g, einer mittleren Funktionalität von 3 hergestellt mit einem Ethylenoxid zu Propylenoxid-Verhältnis von 30 : 70, |
| 3,31 Gew.-Teile | Wasser, |
| 0,8 Gew.-Teile | Aminopropylimidazol, |
| 0,6 Gew.-Teile | Dimethylaminodiglykol und |
| 0,5 Gew.-Teile | eines Stabilisators (Tegostab® B 8631, Goldschmidt) |

### B-Komponente

Mischung aus einem Polymer-MDI (Gewichtsanteil 50 %) und einem difunktionellem MDI-Gemisch (Gewichtsanteil 50 %) mit einem NCO-Gehalt von 32,7 %.

**Tabelle 1**

| Beispiel | Verbindung (ii), Gew.-% in B-Komponente |
|---|---|
| 1 | Maleinsäureanhydrid, 1,0 Gew.-% |
| 2 | Pyromellitsäureanhydrid, 2,0 Gew.-% |
| 3 | Bernsteinsäureanhydrid, 2,0 Gew.-% |
| 4 | Polymaleinsäureanhydrid mit einem mittleren Molekulargweicht von 400 bis 500, 1,2 Gew.-% |
| 5 | Poly(methylvinylether-alternierend-maleinsäureanhydrid mit einem durchschnittlichen Moleklulargewicht von 216000, 0,7 Gew.-% |
| 6 | Glutarsäureanhydrid, 1,9 Gew.- % |
| 7 | Dodecenylbernsteinsäureanhydrid, 4,3 Gew.-% |
| 8 | Polytetramehtylenetherglykol endcapped mit Trimellithsäureanhydrid, 2,3 Gew.-% |
| 9 | Maleinsäureanhydrid/Butadien-Copolymer, 5,0 Gew.-% |

Die Herstellung der Weichschaumstoffe erfolgte derart, daß man 750 g A-Komponente bei Raumtemperatur in einem 5 1 Eimer bei einer Kennzahl von 100 mit 393 g B-Komponente mit einem Rührwerk vermischte, die aufschäumende Mischung bei Erreichen der Startzeit in eine auf 53°C temperierte Aluminiumform mit den Abmessungen 40x40x10 cm goß, die Form verschloß und nach Erreichen der Gelzeit den Weichschaum entformte.

Die erfindungsgemäß hergestellten Polyurethanschaumstoffe wurden hinsichtlich ihrer mechanischen Eigenschaften direkt nach der Herstellung sowie nach einer Lagerung von 3 Tagen bei 90°C und 90 % rel. Luftfeuchtigkeit im Vergleich zu Weichschaumstoffen, die mit den angegebenen A- und B-Komponenten ohne Zusatz von Verbindungen gemäß Tabelle 1 hergestellt worden waren (Vergleich), untersucht. Die hervorragenden Eigenschaften, insbesondere die deutlich gesteigerte Stabilität der erfindungsgemäßen Schaumstoffe sind der Tabelle 2 zu entnehmen.

**Tabelle 2**

| Beispiel | DVR | RPE | Stauchhärte | Zugfestigckeit | Dehnung |
|---|---|---|---|---|---|
| Vergleich o.L. | 4,1 | 68,5 | 5,1 | 95 | 96 |
| Vergleich m.L. | 15,6 | 49,3 | 3,8 | 59 | 105 |
| 1 o.L. | 3,6 | 69,7 | 4,9 | 88 | 84 |
| 1 m.L. | 5,6 | 64,3 | 5,1 | 71 | 79 |
| 2 o.L. | 4,7 | 68,0 | 4,9 | 88 | 95 |
| 2 m.L. | 6,1 | 61,0 | 4,1 | 79 | 105 |
| 3 o.L. | 4,3 | 72,7 | 5,6 | 88 | 85 |
| 3 m.L. | 5,7 | 65,2 | 4,5 | 101 | 104 |
| 4 o.L. | 3,9 | 70,6 | 5,1 | 91 | 91 |
| 4 m.L. | 5,9 | 63,5 | 3,9 | 88 | 101 |
| 5 o.L. | 5,1 | 67,8 | 4,7 | 88 | 91 |
| 5 m.L. | 7,3 | 60,5 | 4,4 | 76 | 99 |
| 6 o.L. | 3,3 | 69,7 | 4,6 | 93 | 96 |
| 6 m.L. | 5,7 | 63,5 | 3,8 | 76 | 96 |
| 7 o.L. | 3,4 | 68,9 | 4,6 | 81 | 85 |
| 7 m.L. | 7,3 | 59,9 | 3,8 | 70 | 94 |
| 8 o.L. | 3,9 | 68,9 | 6,3 | 91 | 86 |
| 8 m.L. | 5,7 | 64,0 | 4,9 | 76 | 86 |
| 9 o.L. | 3,9 | 70,4 | 5,5 | 93 | 89 |
| 9 m.L. | 5,2 | 65,3 | 4,1 | 76 | 88 |
| o.L.: ohne Lagerung | | | | | |
| m.L.: mit Lagerung | | | | | |
| DVR: Druckverformungsrest, angegeben in [%], gemessen nach DIN 53572 | | | | | |
| RPE: Rückprallelastizität, angegeben in [%], gemessen nach DIN 53573 | | | | | |
| Stauchärte: angegeben in [kPa], gemessen nach DIN 53577 bei 40 % Verformung | | | | | |
| Zugfestigkeit: angegeben in [kPa], gemessen nach DIN 53571 | | | | | |
| Dehnung: angegeben in [%], gemessen nach DIN 53571 | | | | | |

Die überraschenden Vorteile der vorliegenden Erfindung sollen zudem beispielhaft für die Herstellung von Polyurethan-Schuhsohlen dargestellt werden.

Ein wichtiges Qualitätskriterium für Polyetherurethanschuhsysteme ist das Dauerbiegeverhalten. Geprüft wird das Dauerbiegeverhalten nach folgender Methode: In einem entsprechenden Polyurethanformkörper bzw. einer Schuhsohle wird ein 2 mm breiter Einstich geschnitten und darauf das Material dem Siegelest unterworfen. Dieser sieht vor, daß das Material bei 100000 Biegungen von 90° und einer Frequenz von 150 Biegungen/Minute eine maximale Rißerweiterung von 4 mm erfahren darf, um den Test noch zu bestehen. Darüber hinaus muß das System den Biegetest auch bestehen, nachdem es einer hydrolytischen Alterung unterzogen wurde. Erschwert wird die Prüfung dadurch, daß der Dauerbiegetest in einen vor und nach Hydrolyse überlappenden Indexbereich bestanden werden muß.

Mit den folgenden Rezepturen, die üblicherweise zur Herstellung von Polyurethan-Schuhsohlen eingesetzt werden können, wurden Prüfkörper hergestellt, die auf ihr Dauerbiegeverhalten vor und nach Lagerung untersucht wurden.

### A-Komponente

| | |
|---|---|
| 30 Gew.-Teile | eines trifunktionelle Polyetherpolyols basierend auf Propylenoxid mit einem Ethylenoxidendblock von 21 % mit einer OH-Zahl von 26 mg KOH/g und einer und einer mittleren Funktionalität von 3; |
| 57,3 Gew.-Teile | eines difunktionelle Polyetherpolyols basierend auf Propylenoxid mit einem Ethylenoxidendblock von 19 % mit einer OH-Zahl von 28 mg KOH/g und einer und einer mittleren Funktionalität von 2; |
| 7,5 Gew.-Teile | Butandiol-1,4 |
| 4,5 Gew.-Teile | 25%igen Lösung von Dabco in Butandiol-1,4 |
| 0,2 Gew.-Teile | Zinnkatalysators |
| 0,47 Gew.-Teile | Wasser |

### B-Komponente

Präpolymer (96 Gew.-%) mir einem NCO-Gehalt von 20,5 % erhalten durch Umsetzung von 4,4'-MDI (76 Gew.-%), einem Polymer MDI (4 Gew.-%), einem difunktionellen Polyol (14 Gew.-%) mit einer Hydroxylzahl von 104 mg KOH/g, basierend auf Propylenoxid und Dipropylenglykol (5 %) sowie 4 Gew.-% Alkylbernsteinsäureanhydrid.

Die Vergleichsprüfkörper wurden mit einer B-Komponente hergestellt, die 100 % des Prepolymers und kein Säureanhydrid enthielt.

Die Herstellung der Polyurethanprüfkörper erfolgte derart, daß man die A-Komponente bei 25°C Temperatur in einer EMB Niederdruck Puromaten mit der B-Komponente bei einem Masseverhältnis (MV) von A-Komponente zu B-Komponente, das in der Tabelle 3 angegeben ist, vermischte, die aufschäumende Mischung in eine auf 45°C temperierte Aluminiumform mit den Abmessungen 20x20x1 cm goß, die Form verschloß und nach 4,5 Minuten der Gelzeit den mikrozellulären Schaum (das geschäumte Elastomer) entformte.

Die erfindungsgemäß hergestellten Polyurethanformkörper wurden hinsichtlich ihrer mechanischen Eigenschaften nach einem Tag Lagerung und Nachreaktion bei Raumtemperatur sowie nach einer Lagerung von 7 Tagen bei 70°C und 100 % rel. Luftfeuchtigkeit im Vergleich zu den zelligen Elastomeren, die mit den angegebenen A- und B-Komponenten ohne Zusatz von Verbindungen gemäß Tabelle 1 hergestellt worden waren (Vergleich), untersucht. Die hervorragenden Eigenschaften, insbesondere das deutlich verbesserte Dauerbiegeverhalten der erfindungsgemäßen Schaumstoffe sind der Tabelle 3 zu entnehmen.

**Tabelle 3**

| Beispiel | Gew.-% Anhydrid in B | MV A:B =100: =100 : | Dauerbiege eigenschaften vor Lagerung | Dauerbiege eigenschaften nach Lagerung |
|---|---|---|---|---|
| Vergleich | 0 | 90 | 6,8; 5,5; 7,0; 7,8 | 10000 Bruch |
| Vergleich | 0 | 92 | 5,3; 6,2; 4,5; 4,8 | 50000 Bruch |
| Vergleich | 0 | 95 | 60000 Bruch | 5,4; 8,0; 7,2; 5,0 |
| Vergleich | 0 | 98 | 40000 Bruch | 6,0; 5,5; 5,9; 5,7 |
| Vergleich | 0 | 101 | 10000 Bruch | 5,6; 5,6; 5,5; 4,6 |
| 10 | 4 | 96 | 5,2; 4,5; 4,8; 4,7 | 90000 Bruch |
| 11 | 4 | 99 | 4,2, 3,8;3,2; 3,7 | 7,1; 5,6; 6,0; 5,5 |
| 12 | 4 | 102 | 4,2; 3,3; 3,2'; 3,5 | 5,5; 5,8; 6,0; 5,4 |
| 13 | 4 | 104,5 | 3,5; 3,3; 3,8; 3,7 | 4,8; 5,6; 5,0; 5,5 |

Die Zahl bei den Dauerbiegeeigenschaften vor der Angabe "Bruch" gibt an, nach wie vielen Belastungen der Prüfkörper brach. Die anderen Angaben bezeichnen die Rißerweiterung in mm, wobei zunächst ein Einstich von 2mm vorgenommen wird und nach dem Dauerbiegeversuch die maximale Rißerweiterung inklusive Einstich nicht mehr als 6mm betragen darf, um den Test noch zu bestehen.

Das Dauerbiegeverhalten konnte durch die erfindungsgemäß hergestellten Polyurethane deutlich verbessert werden, sowohl vor als auch nach einer Lagerung unter hydrolytischen Bedingungen. Dieser Vorteil konnte über einen sehr weiten Indexbereich, d.h. Verhältnis von Isocyanatgruppen zu gegenüber Isocyanaten reaktiven Gruppen der Komponente B, erreicht werden, so daß die Verarbeitungssicherheit des Systems beim Kunden signifikant verbessert wird und weniger Reklamationen zu befürchten sind.

### Beispiele 14 bis 26

Um Bedingungen, wie sie bei oben erwähnten Spezialanwendungen vorkommen können, zu simulieren, wurde mit Proben nachfolgend genannter Weichschaumstoffe eine Feuchtwärmealterung durchgeführt. Hierzu wurden jeweils Probewürfel mit der Kantenlänge 3 cm bei 90°C und 90 % rel. Luftfeuchtigkeit für 72 Stunden im Klimaschrank gealtert. Unter diesen Bedingungen kann es zu einer hydrolytischen Spaltung von Urethan- und Harnstoffbindungen kommen. Dies führt nicht nur zu einer drastischen Verschlechterung der mechanischen Eigenschaften, sondern auch zur Bildung aromatischer Amine. Aus diesem Grund wurden bei den hergestellten Schaumstoffen sowohl im unbehandelten Zustand als auch nach Feucht-Wärmealterung neben dem Druckverformungsrest, der Rückprallelastizität und der Stauchhärte auch der Gehalt an MDA oder TDA gemessen.
Die Extraktion der aromatischen Amine wurde mittels einer von Prof. Skarping, Universität Lund, entwickelten Methode durchgeführt. Hierzu wird der Schaum mit 10 ml Essigsäure (w = 1 Gew.-%) 10 mal ausgequetscht. Die Essigsäure wurde bei zusammengedrückter Schaumprobe in einen 50-ml-Meßkolben überführt. Der Vorgang wird dreimal wiederholt und der Meßkolben wird bis zur Meßmarke mit Essigsäure aufgefüllt. Anschließend wurde der MDA-Gehalt der vereinigten Extrakte mittels Kapillarelektrophorese mit UV-Detektion bestimmt. Die in den Tabellen 2 und 4 angegebenen MDA-Gehalte entsprechen den Absolutgehalten des gebildeten MDA im PUR-Schaum.

Polyurethanweichschaumstoffe wurden mit der folgenden Rezeptur 1 hergestellt, wobei in den einzelnen Beispielen die in der Tabelle 4 angegebenen Zusätze an Säureanhydriden der Isocyanatkomponente (B-Komponente) vor dem Vermischen mit der Polykomponente (A-Komponente) zugesetzt wurden. Zum Vergleich wurden Schaumstoffe ohne Zugabe von Säureanhydriden hergestellt.

### A-Komponente (Rezeptur 1)

| | |
|---|---|
| 97 Gew.-Teile | eines Polyetherpolyalkohols mit einer Hydroxylzahl von 28 mg KOH/g, einer mittleren Funktionalität von 2,3 hergestellt mit einem Ethylenoxid zu Propylenoxid-Verhältnis von 14 : 86, |
| 3 Gew.-Teile | eines Polyetherpolyalkohols mit einer Hydroxylzahl von 42 mg KOH/g, einer mittleren Funktionalität von 3 hergestellt mit einem Ethylenoxid zu Propylenoxid-Verhältnis von 30 : 70, |
| 3,31 Gew.-Teile | Wasser, |
| 0,8 Gew.-Teile | Aminopropylimidazol, |
| 0,6 Gew.-Teile | Dimethylaminodiglykol und |
| 0,5 Gew.-Teile | eines Stabilisators (Tegostab® B 8631, Goldschmidt) |

### B-Komponente (Rezeptur 1)

Mischung aus einem Polymer-MDI (Gewichtsanteil 50 %) und einem difunktionellem MDI-Gemisch (Gewichtsanteil 50 %) mit einem NCO-Gehalt von 32,7 %.

**Tabelle 4:**

| Anhydridzusätze bei Rezeptur 1 | |
|---|---|
| Beispiel | Verbindung (ii), Gew.-% in B-Komponente |
| 14 | Maleinsäureanhydrid, 1,0 Gew.-% |
| 15 | Pyromellitsäureanhydrid, 2,0 Gew.-% |
| 16 | Bernsteinsäureanhydrid, 2,0 Gew.-% |
| 17 | Polymaleinsäureanhydrid mit einem mittleren Molekulargwicht von 400 bis 500, 1,2 Gew.-% |
| 18 | Poly(methylvinylether-alternierend-maleinsäureanhydrid mit einem durchschnittlichen Moleklulargewicht von 216000, 0,7 Gew.-% |
| 19 | Glutarsäureanhydrid, 1,9 Gew.-% |
| 20 | Dodecenylbernsteinsäureanhydrid, 4,3 Gew.-% |
| 21 | Polytetramehtylenetherglykol endcapped mit Trimellithsäureanhydrid, 2,3 Gew.-% |
| 22 | Maleinsäureanhydrid/Butadien-Copolymer, 5,0 Gew.-% |

Die Herstellung der Weichschaumstoffe erfolgte derart, daß man 750 g A-Komponente bei Raumtemperatur in einem 5-1-Eimer bei einer Kennzahl von 100 mit 393 g B-Komponente mit einem Rührwerk vermischte, die aufschäumende Mischung bei Erreichen der Startzeit in eine auf 53°C temperierte Aluminiumform mit den Abmessungen 40x40x10 cm goß, die Form verschloß und nach Erreichen der Gelzeit den Weichschaum entformte.

**Tabelle 5:**

| MDA-Gehalte, Rezeptur 1 | | |
|---|---|---|
| Beispiel | 2,4'-MDA [ppm] | 4,4'-MDA [ppm] |
| Vergleich o.L. | < 1 | < 1 |
| Vergleich m.L. | 687 | 397 |
| 14 o.L. | < 1 | < 1 |
| 14 m.L. | 130 | 67 |
| 15 o.L. | < 1 | < 1 |
| 15 m.L. | 130 | 73 |
| 16 o.L. | < 1 | < 1 |
| 16 m.L. | 115 | 74 |
| 17 o.L. | < 1 | < 1 |
| 17 m.L. | 142 | 61 |
| 18 o.L. | < 1 | < 1 |
| 18 m.L. | 170 | 73 |
| 19 o.L. | < 1 | < 1 |
| 19 m.L. | 133 | 56 |
| 20 o.L. | < 1 | < 1 |
| 20 m.L. | 160 | 68 |
| 21 o.L. | < 1 | < 1 |
| 21 m.L. | 149 | 62 |
| 22 o.L. | < 1 | < 1 |
| 22 m.L. | 71 | 18 |

Des weiteren wurden Polyurethanweichschaumstoffe wurden mit der folgenden Rezeptur 2 hergestellt, wobei in den einzelnen Beispielen die in der Tabelle 6 angegebenen Zusätze an Säureanhydriden der Isocyanatkomponente (B-Komponente) vor dem Vermischen mit der Polykomponente (A-Komponente) zugesetzt wurden. Zum Vergleich wurden Schaumstoffe ohne Zugabe von Säureanhydriden hergestellt.

### A-Komponente (Rezeptur 2):

| | |
|---|---|
| 97 Gew.-Teile | eines Polyols mit der OHZ 28 mit einer mittleren Funktionalität von 2,3 und einem EO/PO Verhältnis von 14/86 |
| 3 Gew.-Teile | eines Polyols mit der OHZ 42, einer mittleren Funktionalität von 3 und einem PO/EO Verhältnis von 30/70 |
| 3,31 Gew.-Teile | Wasser |
| 0,22 Gew.-Teile | 1,4-Diazabicyclo[2.2.2]octan |
| 0,14 Gew.-Teile | Lupragen® N 206 (BASF Aktiengesellschaft) |
| 0,24 Gew.-Teile | Kosmos 29 |
| 0,5 Gew.-Teile | Tegostab® B 8631 (Goldschmidt) |

### B-Komponente (Rezeptur 2):

Lupranat® T 80 (BASF Aktiengesellschaft)

**Tabelle 6:**

| Anhydridzusatz bei Rezeptur 2 | |
|---|---|
| Beispiel | Verbindung (ii), Gew.-% in B-Komponente |
| 23 | Maleinsäureanhydrid, 1,0 Gew.-% |
| 24 | Pyromellitsäureanhydrid, 2,0 Gew.-% |
| 25 | Glutarsäureanhydrid, 1,9 Gew.- % |
| 26 | Dodecenylbernsteinsäureanhydrid, 4,3 Gew.-% |

**Tabelle 7:**

| TDA-Gehalte, Rezeptur 2 | | |
|---|---|---|
| Beispiel | 2,4-TDA [ppm] | 2,6-TDA [ppm] |
| Vergleich o.L | < 1 | < 1 |
| Vergleich m.L. | 28 | 12 |
| 23 o.L. | < 1 | < 1 |
| 23 m.L. | 4 | 1 |
| 24 o.L. | < 1 | < 1 |
| 24 m.L. | 3 | 1 |
| 25 o.L. | < 1 | < 1 |
| 25 m.L. | 4 | 1 |
| 26 o.L. | < 1 | < 1 |
| 26 m.L. | 3 | < 1 |

### Diskussion der Ergebnisse

Die erfindungsgemäßen Vorteile, d.h. der deutlich gesenkte Gehalt an primären aromatischen Aminen nach einer Lagerung unter feucht-warmen Bedingungen durch Zusatz von Säureanhydriden in Polyurethanschaumstoffen, konnten anhand der angeführten Beispiele überzeugend nachgewiesen werden. Nach der Fertigstellung des Schaumstoffes kommt es unter Feuchtigkeitseinwirkung zur partiellen Hydrolyse der Anhydride unter Bildung der entsprechenden Carbonsäure. Diese Carbonsäuren wiederum sind zur Deaktivierung der verwendeten tertiären Aminkatalysatoren befähigt, indem der katalytisch aktive tertiäre Stickstoff protoniert wird und damit in seiner Aktivität gegenüber der Spaltung von Urethan- und Harnstoffbindungen signifikant gehindert wird. Durch den Zusatz der erfindungsgemäßen Carbonsäureanhydride werden folglich deutlich weniger Urethan- und Harnstoffbindungen gespalten. Dies äußert sich nicht nur in wesentlich geringeren Mengen an extrahierbaren primären Aminen, sondern auch in einer deutlich geringeren Verschlechterung der mechanischen Eigenschaften der Schaumstoffe nach Feucht-Wärmelagerung. Wie die Ergebnisse weiter zeigen, ist in den Testsystemen verglichen zu den beiden Vergleichssystemen ein deutlich geringerer Abfall der Härte, der Zugfestigkeit und der Rückprallelastizität nach der Feucht-Wärmealterung zu verzeichnen. Auch die Druckverformungsreste halten sich auf einem wesentlich niedrigeren Niveau. Die zugesetzten Carbonsäureanhydride eignen sich demnach in hervorragender Weise als Stabilisatoren gegen eine hydrolytische Spaltung von Urethan- und Harnstoffbindungen und damit gegen die Bildung primärer Amine in Polyurethanprodukten. Des weiteren sind die erfindungsgemäßen Anhydride zur Reaktion mit aromatischen Aminen befähigt unter Ausbildung der entsprechenden Carbonsäureamide.

## Patentansprüche

1. Verfahren zur Herstellung von geschäumten Polyisocyanat-Polyadditionsprodukten oder Polyurethanelastomeren durch Umsetzung von Isocyanaten mit gegenüber Isocyanaten reaktiven Verbindungen mit einem Molekulargewicht von 60 bis 10000 g/mol in Gegenwart von gegebenenfalls Katalysatoren, Treibmitteln, Zusatzstoffen und/oder Hilfsmitteln, **dadurch gekennzeichnet, daß** man die Umsetzung in Gegenwart von mindestens einem organischen oder anorganischen Säureanhydrid (ii) durchführt, wobei eine Mischung enthaltend (i) mindestens ein Isocyanat sowie (ii) mindestens ein organisches und/oder anorganisches Säureanhydrid eingesetzt wird.

2. Verfahren nach Anspruch 1, **dadurch gekennzeichnet, daß** man die Säureanhydride (ii) in einer Menge von 0,01 bis 20 Gew.-%, bezogen auf das Gewicht der Summe der Säureanhydride und der eingesetzten Isocyanate, einsetzt.

3. Polyisocyanat-Polyadditionsprodukte erhältlich nach einem Verfahren gemäß Anspruch 1.

4. Verwendung von Säureanhydriden in Polyisocyanat-Polyadditionsprodukten zur Stabilisierung der Polyisocyanat-Polyadditionsprodukten, insbesondere Polyurethanen, gegen eine Spaltung der Urethan- und/oder Harnstoffbindung.

5. Verwendung von Säureanhydriden in Polyisocyanat-Polyadditionsprodukten zur Reaktion mit Aminogruppen in den Polyisocyanat-Polyadditionsprodukten.

## Claims

1. A process for producing foamed polyisocyanate polyaddition products or polyurethane elastomers by reacting isocyanates with compounds which are reactive toward isocyanates and having a molecular weight of 60 to 10 000 g/mol in the presence of catalysts, blowing agents, additives and/or auxiliaries, wherein the reaction is carried out in the presence of at least one organic or inorganic acid anhydride (ii), a mixture comprising (i) at least one isocyanate and (ii) at least one organic and/or inorganic acid anhydride being used.

2. A process as claimed in claim 1, wherein the acid anhydrides (ii) are used in an amount of from 0.01 to 20% by weight, based on the total weight of the acid anhydrides and the isocyanates used.

3. A polyisocyanate polyaddition product obtainable by a process as claimed in claim 1.

4. The use of acid anhydrides in polyisocyanate polyaddition products for stabilizing the polyisocyanate polyaddition products, in particular polyurethanes, against cleavage of the urethane and/or urea bond.

5. The use of acid anhydrides in polyisocyanate polyaddition products for reacting with amino groups in the polyisocyanate polyaddition products.

## Revendications

1. Procédé de préparation de produits de polyaddition de polyisocyanates ou élastomères de polyuréthanes expansés, par réaction de isocyanates avec des composés capables de réagir avec des isocyanates, ayant un poids moléculaire de 60 à 10 000 g/mole, en présence éventuellement de catalyseurs, d'agents gonflants, d'additifs et/ou d'agents auxiliaires, **caractérisé en ce que** l'on effectue la réaction en présence d'au moins un anhydride d'acide (ii) organique ou inorganique, en mettant en oeuvre un mélange qui contient (i) au moins un isocyanate ainsi que (ii) au moins un anhydride d'acide organique et/ou inorganique.

2. Procédé selon la revendication 1, **caractérisé en ce que** l'on met en oeuvre les anhydrides d'acide (ii) en une proportion de 0,01 à 20 % en poids par rapport à la somme des poids des anhydrides d'acide et des isocyanates mis en oeuvre.

3. Produits de polyaddition de polyisocyanates pouvant être obtenus par un procédé selon la revendication 1.

4. Utilisation d'anhydrides d'acide dans des produits de polyaddition de polyisocyanates pour stabiliser les produits de polyaddition de polyisocyanates, en particulier des polyuréthanes, vis-à-vis du clivage de la liaison uréthane et/ou urée.

5. Utilisation d'anhydrides d'acide dans des produits de polyaddition de polyisocyanates pour la réaction avec des groupes amino dans les produits de polyaddition de polyisocyanates.
